# EUROPÄISCHE PATENTSCHRIFT

(11) **EP 1 327 057 B1**
(45) Veröffentlichungstag und Bekanntmachung des Hinweises auf die Patenterteilung: **27.05.2009**
(21) Anmeldenummer: 01982431.7
(22) Anmeldetag: 12.10.2001
(51) Int. Cl.: F01K 23/10, F02C 7/224

(54) **VORRICHTUNG UND VERFAHREN ZUR BRENNSTOFFVORWÄRMUNG IN KOMBINIERTEN GAS- UND DAMPFTURBINENANLAGEN**
DEVICE AND METHOD FOR PREHEATING COMBUSTIBLES IN COMBINED GAS AND STEAM TURBINE INSTALLATIONS
DISPOSITIF ET PROCEDE DE RECHAUFFAGE D'UN COMBUSTIBLE DANS DES SYSTEMES MIXTES A TURBINES A GAZ ET A VAPEUR

(30) Priorität: 17.10.2000 EP 00122602
(43) Veröffentlichungstag der Anmeldung: 16.07.2003
(73) Patentinhaber: SIEMENS AKTIENGESELLSCHAFT, 80333 München (DE)
(72) Erfinder: SCHMID, Erich, 91080 Marloffstein (DE); SCHÖTTLER, Michael, 91052 Erlangen (DE)
(86) Internationale Anmeldenummer: PCT/EP2001/011842
(87) Internationale Veröffentlichungsnummer: WO 2002/033225

(56) Entgegenhaltungen:
- EP-A- 0 588 392
- EP-A- 0 931 911
- DE-A- 4 321 081

## Beschreibung

Die Erfindung betrifft eine Vorrichtung zur Brennstoffvorwärmung in kombinierten Gas- und Dampfturbinenanlagen, mit zumindest einem Dampferzeuger zur Erwärmung, Verdampfung und Überhitzung von Speisewasser, der einen Speisewasservorwärmer oder Kondensatvorwärmer, einen Verdampfer und einen Überhitzer aufweist, wobei zumindest ein Teil des erhitzten Speisewassers zur Vorwärmung von Brennstoff einsetzbar ist und der Brennstoffvorwärmer durch eine Speisewasserzuleitung mit Speisewasser mit einer vorbestimmten Temperatur versorgbar ist, und nach dem Erwärmen des Brennstoffs das abgekühlte Speisewasser mittels einer Speisewasserableitung ableitbar ist.

Zur Bereitstellung von Dampf zum Antreiben einer Dampfturbine wird Speisewasser aufgeheizt, verdampft und unter hohen Druck überhitzt. Dies erfolgt in der Regel in mehreren Dampferzeugerstufen, in der Regel einer Niederdruckdampferzeugerstufe, einer Mitteldruckdampferzeugerstufe und einer Hochdruckdampferzeugerstufe. Die Dampferzeugerstufen bestehen aus einem Speisewasservorwärmer oder Kondensatvorwärmer, in dem das Speisewasser, das von einer Speisewasserpumpe zugeführt wird, vor Eintritt in eine der jeweiligen Druckstufe zugeordneten Trommel auf Siedetemperatur erwärmt und z.T. auch verdampft wird, einem an die jeweilige Trommel angeschlossenen Verdampfer, in dem Sattdampf erzeugt wird, und einem an den Dampfbereich der Trommel angeschlossenen Überhitzer zur Zuführung von Wärme zum Sattdampf ohne Steigerung des Drucks des Sattdampfes, der dann anschließend zu einer dem jeweiligen Dampfdruck entsprechenden Teil der Dampfturbine (Nieder-, Mittel- und Hochdruckturbinenteil) geleitet wird. Die Wärmeversorgung der Dampferzeugerstufen erfolgt bei einer kombinierten Gas-/Dampfturbinenanlage durch die heißen Abgase einer Gasturbine. In der Mitteldruckdampferzeugerstufe wird zusätzlich der aus dem Hochdruckturbinenteil gewonnene Abdampf wiederum dem überhitzten Mitteldruckdampf zugemischt und in einem Zwischenüberhitzer noch einmal aufgeheizt, um anschließend dem Mitteldruckturbinenteil zugeführt zu werden. Alternativ zur Zuleitung zum entsprechenden Dampfturbinenteil kann der Dampf auch in einen Dampfturbinenkondensator geleitet werden, von wo aus sich der Wasser/Dampfkreislauf schließt, indem eine Kondensatpumpe das sich im Kondensator bildende Kondensat wieder zum Kondensatvorwärmer pumpt. Zur Bereitstellung von Energie zur Erzeugung von Gas für die Gasturbine oder von zusätzlicher Wärme für die Dampferzeuger der Dampfturbine in einer kombinierten Gas-/Dampfturbinenanlage wird Brennstoff, zum Beispiel Erdgas, verbrannt. Um diese Verbrennung effektiv zu gestalten, wird der Brennstoff vorher erwärmt. Die Vorwärmung des Brennstoffs erfolgt mittels eines Brennstoffvorwärmers. Hierzu wird beispielsweise ein Teil des bereits erhitzten Mitteldruckspeisewassers nach dem Mitteldruckspeisewasservorwärmer vor Eintritt in die Mitteldrucktrommel abgezweigt, im Wärmetauscherverfahren an dem Brennstoff vorbeigeleitet und zwischen Kondensatpumpe und Kondensatvorwärmer wieder dem Wasser/Dampfkreislauf zugeleitet. Dabei erreicht der Brennstoff Temperaturen bis zu 200°C. Alternativ wird Mitteldruckspeisewasser schon vor Eintritt in den Mitteldruckspeisewasservorwärmer abgezweigt, wobei Brennstofftemperaturen von etwa 140-160°C erreicht werden.

Nachteilig hierbei ist, daß der Brennstoffvorwärmer eine hohe Druckauslegung haben muß, wodurch er gegenüber Temperaturänderungen empfindlich wird und teuer in der Herstellung und Wartung. Zudem kann selbst bei modernen Gasturbinenanlagen die mögliche Vorwärmung des Brennstoffs bis auf 200°C kaum ausgenutzt werden, da bei höherer Vorwärmung beispielsweise das Problem des sogenannten "Brennkammerbrummens", so daß die installierten, teuren Vorwärmsysteme bisher kaum eingesetzt werden können.

Das Dokument EP 0 931 911 offenbart eine Vorrichtung zur Brennstofferwärmung in kombinierten Gas- und Dampfturbinenanlagen, wobei eine oder zwei Brennstoffvorwärmstufen vorgesehen sind.

Aufgabe der vorliegenden Erfindung ist es daher, eine Vorrichtung zur Brennstoffvorwärmung der oben beschriebenen Art zu liefern, die in unterschiedlichen Gasturbinenanlagen einsetzbar ist, sowie in ihrer Heizleistung an einen vorbestimmten Brennstoffvorwärmbedarf schnell und kostengünstig anpaßbar ist.

Die Aufgabe wird dadurch gelöst, dass die Brennstoffvorrichtung drei Brennstoffvorwärmstufen umfasst, wobei mittels der Speisewasserzuleitung eine erste Brennstoffvorwärmstufe mit einem Kondensatvorwärmer, eine zweite Brennstoffvorwärmstufe mit einem Mitteldruckspeisewasservorwärmer und eine dritte Brennstoffvorwärmstufe mit einem Hochdruckspeisewasservorwärmer verbunden ist.

Durch eine derartige Vorrichtung ist ein hoher Standardisierungsgrad mit einem Wiederholungseffekt bei der Projektierung und Realisierung erreichbar. Durch den Aufbau aus einzelnen, nach Bedarf einsetzbaren Brennstoffvorwärmstufen lassen sich verschiedene Temperaturbereiche stufenweise einstellen, je nach Anordnung der Brennstoffvorwärmstufen und deren Anschluß an den/die Dampferzeuger. Somit ist ein modularer Aufbau möglich, so daß die Vorrichtung für verschiedene Gas-/Dampfturbinenanlagen eingesetzt werden kann oder durch einfache Modifikationen anpaßbar ist (Moduleffekt). Weiterhin kann der Brennstoff hierdurch schonend in Stufen auf eine sehr hohe Temperatur erwärmt werden. Zugleich ist lediglich eine an den jeweilig herrschenden Druck und die Temperatur angepaßte Auslegung der Brennstoffvorwärmstufe notwendig. Bei den niedrigeren Druckstufen ist somit eine weniger aufwendige Auslegung möglich, wodurch die Sicherheit nicht eingeschränkt wird und zudem Kosten gespart werden können.

Falls eine Brennstoffvorwärmung in einer ersten Stufe (zum Beispiel mit Kondensat-Rezirkulation) erfolgt, gilt: Eine vollständige Nutzung der Speisewassermenge zur Brennstoffvorwärmung wird erreicht, wenn der Speisewasservorwärmer aus zwei Teilen aufgebaut ist, die zum Abgas parallel geschaltet sind und die Brennstoffvorwärmstufe zwischen die Teile geschaltet ist, wobei die Speisewasserzuleitung von einem Ausgang des ersten Teils des Speisewasservorwärmers zur Brennstoffvorwärmstufe und die Speisewasserableitung von der Brennstoffvorwärmstufe zu einem Eingang des zweiten Teils des Speisewasservorwärmers führt. Bei dieser Vorrichtung durchläuft die gesamte Speisewassermenge zuerst einen Teil des Speisewasservorwärmers, wird aufgeheizt und durchströmt dann die Brennstoffvorwärmstufe, in der es die vorher aufgenommene Wärme ganz oder teilweise abgibt. Anschließend durchläuft das abgekühlte Speisewasser den zweiten Teil des Speisewasservorwärmers, in dem es wieder aufgeheizt wird. Es entstehen somit keine Verluste aufgrund von Drosselungen, die bei einem Abzweigen von Speisewasser erfolgen würden. Es sind nur geringere Pumpleistungen erforderlich. Es muß vorteilhafterweise keine zusätzliche Zirkulation von Speisewasser erfolgen. Der Wirkungsgrad der Brennstoffvorwärmstufe wird somit entsprechend hoch.

Wenn die Speisewasserzuleitung einer Brennstoffvorwärmstufe an der Speisewasserpumpe nach dem Kondensatvorwärmer angesetzt ist und die Speisewasserableitung der Brennstoffvorwärmstufe vor den Kondensatvorwärmer führt, ist aufgrund des Drucks, der durch die Speisewasserpumpe ausgeübt wird, keine zusätzliche Kondensatrückführungspumpe notwendig.

Es ist keine Abdrosselung bis auf Niederdruckniveau, z.B. etwa 4-5 bar notwendig, wenn die Speisewasserzuleitung einer Brennstoffvorwärmstufe nach einem Speisewasservorwärmer angesetzt ist und die Speisewasserableitung der Brennstoffvorwärmstufe vor die Speisewasserpumpe führt.

Die Ausdampfungen sind gering, wenn die Speisewasserzuleitung einer Brennstoffvorwärmstufe zwischen Mitteldrucktrommel und Mitteldruckspeisewasservorwärmer angesetzt ist und die Speisewasserableitung der Brennstoffvorwärmstufe an die Niederdrucktrommel führt.

Wenn die erste und/oder die zweite und/oder die dritte Brennstoffvorwärmstufe jeweils zwischen den beiden Teilen des Kondensatvorwärmers und/oder den beiden Teilen des Mitteldruckspeisewasservorwärmers und/oder den beiden Teilen des Hochdruckspeisewasservorwärmers geschaltet sind, muß vorteilhafterweise kein zusätzliches Speisewasser zirkuliert werden.

Ein langsameres Anfahren mit einem geringeren Temperaturgradienten ist gewährleistet, wenn eine Zumischleitung beginnend zwischen der Kondensatpumpe und einer Absperrklappe zum Einlaß des Speisewassers in die Brennstoffvorwärmstufe führt. Die Menge des zugemischten, kühleren Speisewassers kann kontinuierlich eingestellt werden, wodurch die Temperaturen reguliert werden.

Ein geregeltes Anfahren im Mitteldruckbrennstoffvorwärmer ist gegeben, wenn eine Zumischleitung an einem Einlaß der Brennstoffvorwärmstufe mit einer Mitteldruckspeisewasserzuleitung angesetzt ist, wobei die Zumischleitung zwischen Speisepumpe und Mitteldruckspeisewasservorwärmer beginnt.

Ziel der Erfindung ist es weiterhin ein Verfahren zur Brennstoffvorwärmung in kombinierten Gas- und Dampfturbinenanlagen zu verbessern, wobei Speisewasser in zumindest einem Dampferzeuger in einem Speisewasservorwärmer oder Kondensatvorwärmer erwärmt, in einem Verdampfer verdampft und in einem Überhitzer überhitzt wird, wobei zumindest ein Teil des erhitzten Speisewassers zur Vorwärmung von Brennstoff in einem Brennstoffvorwärmer eingesetzt wird, der durch eine Speisewasserzuleitung mit Speisewasser mit einer vorbestimmten Temperatur versorgt wird, und nach dem Erwärmen des Brennstoffs das abgekühlte Speisewasser mittels jeweils einer Speisewasserableitung abgeleitet wird.

Aufgabe ist es daher ein Verfahren zur Brennstoffvorwärmung in kombinierten Gas- und Dampfturbinenanlagen zu liefern, das in unterschiedlichen Gasturbinenanlagen einsetzbar ist und bei dem die Heizleistung des Brennstoffvorwärmers an einen vorbestimmten Brennstoffvorwärmbedarf schnell und kostengünstig anpaßbar ist.

Die auf ein Verfahren gerichtete Aufgabe wird dadurch gelöst, daß die Brennstoffvorwärmung in bedarfsweise einzeln zuschaltbaren Brennstoffvorwärmstufen erfolgt, durch die der Brennstoff nacheinander geleitet wird. Durch das stufenweise Aufheizen des Brennstoffs ist eine flexible und nahezu optimale Einstellung der Brennstoffvorwärmtemperaturen auf die Erfordernisse der Anlagen möglich, die zugleich kostengünstig ist, weil nicht alle eingesetzten Komponenten allen Druck- und Temperaturanforderungen zugleich gerecht werden müssen, sondern nur den jeweils lokal wirklich herrschenden.

Brennstoffvorwärmstufe, und durch einen zweiten Teil des Speisewasservorwärmers, wobei die beiden Teile zum Abgas parallel geschaltet sind, wird das Speisewasser zunächst direkt auf die gewünschte Temperatur aufgeheizt und anschließend kann die gesamte aufgeheizte Speisewassermenge zum Aufwärmen des Brennstoffes genutzt werden. Danach wird das abgekühlte Speisewasser im zweiten Teil des Speisewasservorwärmers wieder aufgeheizt. Es entstehen somit keine Druckverluste aufgrund von Drosselungen oder eventuelle Wärmeverluste durch langwieriges Umleiten.
Wenn durch eine erste Brennstoffvorwärmstufe Speisewasser aus einem Kondensatvorwärmer geleitet wird, durch eine zweite Brennstoffvorwärmstufe Speisewasser aus einem Mitteldruckspeisewasservorwärmer und durch eine dritte Brennstoffvorwärmstufe Speisewasser aus einem Hochdruckspeisewasservorwärmer, werden die einzelnen Temperatur- und Druckzustände des Speisewassers besonders vorteilhaft ausgenutzt und die einzelnen Brennstoffvorwärmstufen sind jeweils nur auf die Anforderungen einer Stufe auszurichten, wodurch Kosten eingespart werden können (modularer Aufbau).

In den Figuren werden Ausführungsbeispiele der Erfindung gegeben. Es zeigen:
- Fig.1:: eine schematische Darstellung einer bekannten Gas- und Dampfturbinenanlage,
- Fig.2:: eine Brennstoffvorwärmstufe,
- Fig.3a:: zwei Brennstoffvorwärmstufen,
- Fig.3b:: ein Detail der wasser-/Dampftrennvorrichtung,
- Fig.3c:: zwei Brennstoffvorwärmstufen mit alternativer Leitungsführung,
- Fig.4:: zwei Brennstoffvorwärmstufen, und
- Fig.5:: drei Brennstoffvorwärmstufen gemäß der Erfindung.

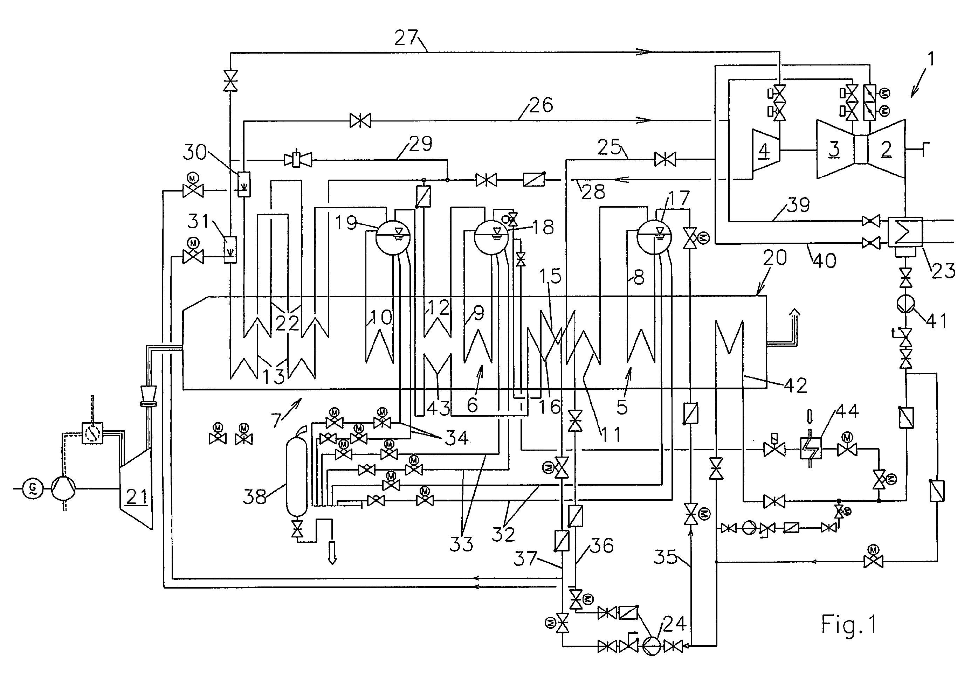

Die Figur 1 zeigt in einer schematischen Darstellung eine bekannte Gas- und Dampfturbinenanlage. Die Dampfturbine 1 ist aus drei Turbinenstufen 2,3,4 aufgebaut, nämlich einer Niederdruckdampfstufe 2, einer Mitteldruckdampfstufe 3 und einer Hochdruckdampfstufe 4. Die Versorgung der Turbinenstufen 2,3,4 mit Dampf erfolgt durch drei Dampferzeuger 5,6,7, nämlich einem Niederdruckdampferzeuger 5, einem Mitteldruckdampferzeuger 6 und einem Hochdruckdampferzeuger 7.

Die Dampferzeuger 5, 6, 7 sind prinzipiell ähnlich aufgebaut. Die Dampferzeuger 5, 6, 7 bestehen jeweils aus einem Verdampfer 8, 9, 10, einem Überhitzer 11, 12, 13, einem Kondensatvorwärmer 42 oder einem Speisewasservorwärmer 15, 16 und einer Trommel 17, 18, 19, in der sich Speisewasserkondensat und Speisewasserdampf sammelt, sowie einer Wärmequelle 20, die im vorliegenden Fall durch Abgase einer Gasturbine 21 gespeist wird.

Das Speisewasser wird zunächst in einem Kondensatvorwärmer 42 vorgewärmt. Danach wird ein Teil des Speisewassers abgezweigt und durch eine Niederdruckspeisewasserzuleitung 35 zu einer Niederdrucktrommel 17 geführt. Ein anderer Teil des Speisewassers wird von einer Speisewasserpumpe 24 über eine Mitteldruckspeisewasserzuleitung 36 zu einer Mitteldrucktrommel 18 und über eine Hochdruckspeisewasserzuleitung 37 zu einer Hochdrucktrommel 19 geführt. Von den Trommeln 17, 18, 19 aus wird aus dem Speisewasser zunächst im Niederdruckverdampfer 8, im Mitteldruckverdampfer 9 bzw. im Hochdruckverdampfer 10 Sattdampf erzeugt. Daran schließt sich dann im Niederdruckdampferzeuger 5 der Niederdrucküberhitzer 11 an, in dem der Sattdampf auf die gewünschte Überhitzungstemperatur erwärmt wird. Von dem Niederdrucküberhitzer 11 aus führt eine Niederdruckturbinenzuleitung 25 den Dampf zur Niederdruckturbinenstufe 2 oder bei Umleitungsbetrieb durch eine Niederdruckdampfumleitung 40 in einen Turbinenkondensator 23, in dem der Dampf wieder kondensiert wird und mittels einer Niederdruckturbinenzuleitung 25 den Dampf zur Niederdruckturbinenstufe 2 oder bei Umleitungsbetrieb durch eine Niederdruckdampfumleitung 40 in einen Turbinenkondensator 23, in dem der Dampf wieder kondensiert wird und mittels einer Kondensatpumpe 41 zum Kondensatvorwärmer 42 geleitet wird. Im Mitteldruckdampferzeuger 6 wird das Speisewasser zunächst im Mitteldruckspeisewasservorwärmer 15 erwärmt, anschließend im Mitteldruckverdampfer 9 Sattdampf erzeugt, der dann zum Mitteldrucküberhitzer 12 geleitet wird. Der überhitzte Dampf wird anschließend in eine Hochdruckturbinenableitung 28 eingespeist, die aus dem Hochdruckturbinenteil 4 ausgetretenen Dampf führt, der dann zusammen mit dem Mitteldruckdampf in einem Mitteldruckzwischenüberhitzer 22 weiter überhitzt wird und anschließend über eine Mitteldruckturbinenzuleitung 26 zu der Mitteldruckdampfstufe 3 der Dampfturbine 1 geleitet wird. Alternativ kann der Mitteldruckdämpf über eine Mitteldruckdampfumleitung 39 dem Turbinenkondensator 23 zugeführt werden. Das dem Hochdruckdampferzeuger 7 zugeführte Speisewasser wird zunächst in einem Hochdruckspeisewasservorwärmer 16 und danach in einem weiteren Hochdruckspeisewasservorwärmer 43 erwärmt. Der im Hochdruckverdampfer 10 erzeugte Sattdampf wird in den zwei Stufen des Hochdrucküberhitzers 13 überhitzt und über eine Hochdruckturbinenzuleitung 27 der Hochdruckdampfstufe 4 der Dampfturbine 1 zugeführt. Eine alternative Dampfleitung kann über die Hochdruckdampfumleitung 29 erfolgen, die die Hochdruckturbinenzuleitung 29 mit der Hochdruckturbinenableitung 28 verbindet. Aus allen Trommeln 17,18,19 kann Trommelwasser über Niederdrucktrommelableitungen 32, Mitteldrucktrommelableitungen 33 bzw. Hochdrucktrommelableitungen 34 in einen gemeinsamen Tank 38 abgeführt werden. Zudem kann der überhitzte Mitteldruckdampf und der überhitzte Hochdruckdampf in jeweils einen in die Mitteldruckturbinenzuleitung 26 bzw. die Hochdruckturbinenzuleitung 27 eingebauten Mitteldruckdampfenthitzer 30 bzw. Hochdruckdampfenthitzer 31 (Einspritzkühler) durch Zuführung von nach der Speisewasserpumpe entnommenem Speisewasser abgekühlt werden.

Für die Erzeugung der Gase zum Betrieb der Gasturbine 21 wird Brennstoff, z.B. Erdgas oder Heizöl, benötigt. Zur Brennstoffvorwärmung wird im Stand der Technik, wie in Figur 1 dargestellt, erhitztes Speisewasser aus dem Mitteldruckdampferzeuger 6 verwendet. Das Speisewasser wird nach der Vorwärmung im Mitteldruckspeisewasservorwärmer 15 zu einem Brennstoffvorwärmer 44 geleitet. Im Brennstoffvorwärmer 44 wird im Wärmetauscherprinzip im Gegenstrom die Wärmeenergie vom Speisewasser auf den Brennstoff übertragen. Anschließend wird das abgekühlte Speisewasser vor dem Kondensatvorwärmer 42 wieder in den Speisewasserkreislauf eingespeist. Bei der Brennstofferwärmung wird das Speisewasser auf 60-80 °C abgekühlt, während der Brennstoff auf bis zu 200 °C erwärmt wird. Diese hohe Vorwärmung kann nicht immer ausgenutzt werden, da bei höherer Vorwärmung des Brennstoffs Probleme wie beispielsweise das sogenannte "Brennkammerbrummen" bei der Verbrennung in der Brennkammer der Gasturbine 21 auftreten kann.

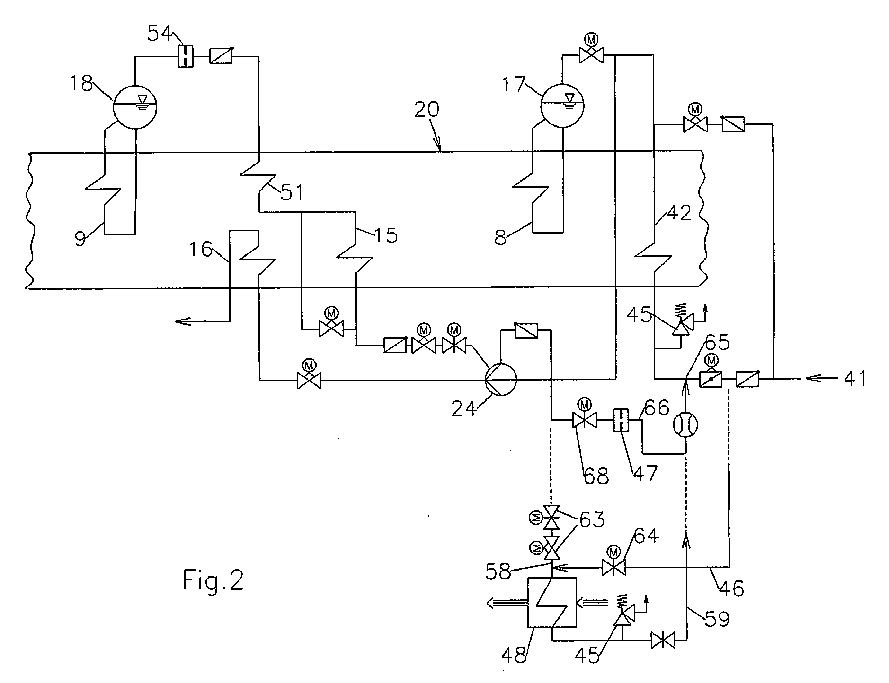

Figur 2 zeigt eine bekannte Brennstoffvorwärmstufe 48. Durch eine Niederdruckspeisewasserzuleitung 58, die ND-Speisewasser aus einer Anzapfung der HD-Speisepumpe entnimmt, wird das durch den Kondensatvorwärmer 42 erwärmte Speisewasser zur Brennstoffvorwärmstufe 48 geleitet. Nach dem Aufheizen des Brennstoffs im Wärmetauscher in der Brennstoffvorwärmstufe 48 wird das Speisewasser durch eine Niederdruckspeisewasserableitung 59 vor dem Kondensatvorwärmer 42 eingeleitet. In der Niederdruckspeisewasserzuleitung 58 sind Ventile 63 mit elektronischem Stellantrieb vorgesehen, um den Durchlauf des Speisewassers absperren bzw. einstellen zu können. Zur Sicherung gegen Zerstörung durch Überdruck ist ein Überdruckventil 45 vorgesehen. Zum schonenden Anfahren mit einem geringeren Temperaturgradienten ist eine Zumischleitung 46 vorgesehen. Die Zumischleitung 46 beginnt vor dem Kondensatvorwärmer 42 noch vor der Einleitstelle 65 des zur Brennstoffvorwärmung abgekühlten Speisewassers. Sie endet vor der Brennstoffvorwärmstufe 48 und weist ein regelbares Ventil 64 auf. Zudem ist die gesamte Brennstoffvorwärmstufe 48 mitsamt der Niederdruckspeisewasserzuleitung 58, der Niederdruckspeisewasserableitung 59 und der Zumischleitung 46 als Nachrüstsystem vorgesehen, so daß es bei Bedarf eingesetzt werden kann. Parallel zu der Niederdruckspeisewasserzuleitung 58 und der Niederdruckspeisewasserableitung 59 und der Brennstoffvorwärmstufe 48 verläuft eine Speisewasserparallelleitung 66 von der Speisewasserpumpe 24 bis vor den Kondensatvorwärmer 42. In dieser Speisewasserparallelleitung 66 ist neben einem weiteren Ventil 68 eine Drosselblende 47 eingerichtet, mit deren Hilfe der höhere Speisewasserdruck (bei umführtem Brennstoffvorwärmer) auf das Niveau des Kondensatsystems abgebaut wird.

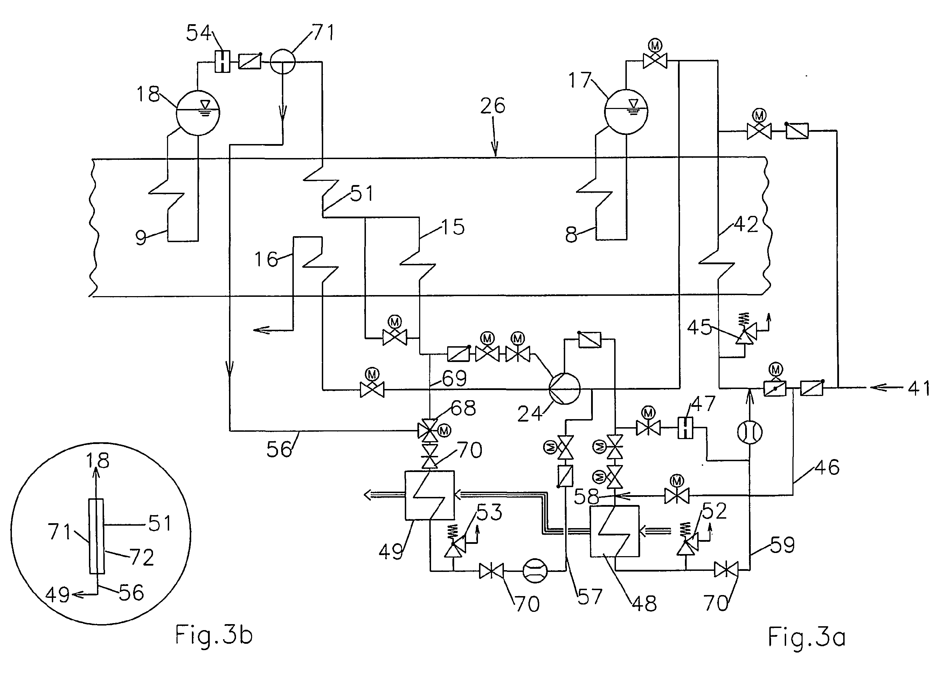

Figur 3a zeigt einen Ausschnitt aus einem Schaltschema einer bekannten Gas- und Dampfturbinenanlage mit zwei Brennstoffvorwärmstufen 48, 49. Die Niederdruckbrennstoffvorwärmstufe 48 ist wie in Figur 2 beschrieben angesetzt. Der in der Brennstoffvorwärmstufe 49 aufgeheizte Brennstoff wird anschließend zu einer zweiten Brennstoffvorwärmstufe, der Mitteldruckvorwärmstufe 49 geschickt. Diese wird durch eine Mitteldruckspeisewasserzuleitung 56 mit Speisewasser versorgt, das nach dem Mitteldruckspeisewasservorwärmer 15, 51 entnommen wird. Der Mitteldruckspeisewasservorwärmer 15, 51 ist dabei aus zwei in Reihe geschalteten Teilen 15 und 51 aufgebaut. Durch Einleitung von kühlerem Speisewasser vor dem zweiten Mitteldruckspeisewasservorwärmer 51, welches vor dem ersten Mitteldruckspeisewasservorwärmer 15 entnommen wird, wird ein Ausdampfen im zweiten Mitteldruckspeisewasservorwärmer 51 verhindert. Dies kann insbesondere bei geringerem Durchfluß relevant werden, beispielsweise, wenn die Mitteldruckbrennstoffvorwärmstufe 49 nicht in Betrieb ist. Zwischen der Mitteldrucktrommel 18 und dem Ansatz der Mitteldruckspeisewasserzuleitung 56 ist eine Drosselblende 54 vorgesehen. Ziel dieser Vorrichtung ist es, Ausdampfungen im Mitteldruckvorwärmer 51 durch Druckanstau bei Dampfbildung zu vermeiden. Weiterhin gibt es einen Dampfblasenseparator 71, dessen Funktionsweise in der Detaildarstellung in Figur 3b näher erläutert wird. Vor der Brennstoffvorwärmstufe 49 ist über ein Dreiwegeventil 68 die Zuleitung von kälterem Speisewasser über eine vor dem Mitteldruckspeisewasservorwärmer 15 mündende Zuleitung 69 zum schonenden Anfahren möglich. Die Ableitung des abgekühlten Speisewassers nach der Brennstoffvorwärmstufe 49 erfolgt über eine Mitteldruckspeisewasserableitung 57, die vor der Speisewasserpumpe 24 mündet. Diese Mitteldruckspeisewasserableitung 57 weist ein Überdruckventil 53 zur Absicherung Drucküberschreitung auf. Die Druckauslegung muß lediglich auf Kondensatvorwärmdruck erfolgen beispielsweise auf 25-30 bar. Falls keine Brennstoffvorwärmung erwünscht ist, können die Speisewasserzuleitungen zu den Brennstoffvorwärmstufen 48, 49 bedarfsweise mittels mehrerer.Ventile 70 abgesperrt werden.

Figur 3b zeigt eine Detaildarstellung des Dampfblasenseparators 71. Ausdampfungen können beispielsweise dadurch entstehen, daß Speisewasser zu stark an Dampf übersättigt ist, wenn z.B. die Speisewassertemperatur oder der Druck sinkt. Durch den Dampfblasenseparator 71 wird die Strömung des vom Mitteldruckspeisewasservorwärmer 51 heranströmende Speisewasser verlangsamt und eventuell vorhandene Dampfblasen steigen vertikal nach oben, von wo aus sie dann zur Mitteldrucktrommel 18 mitgerissen werden. Das Speisewasser ohne Blasen sammelt sich im unteren Dampfblasenseparatorteil 72 und wird hier über die Mitteldruckspeisewasserzuleitung 56 zur Brennstoffvorwärmstufe 49 abgezogen.

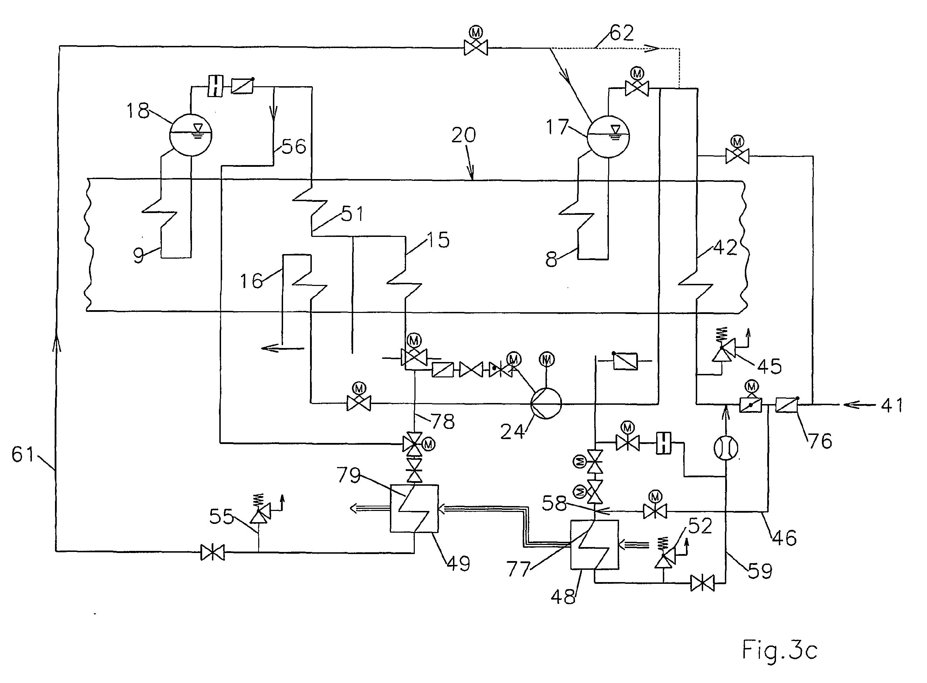

Figur 3c zeigt einen Ausschnitt aus einem Schaltschema einer bekannten Gas- und Dampfturbinenanlage mit zwei Brennstoffvorwärmstufen 48, 49. Die erste Brennstoffvorwärmstufe 48 entspricht der in Figur 3a. Die Mitteldruckspeisewasserableitung 61/62 der zweiten Brennstoffvorwärmstufe 49 verläuft zur Niederdrucktrommel 17. Auf diese Weise ergeben sich geringere Ausdampfprobleme, weil das Speisewasser noch recht heiß ist.

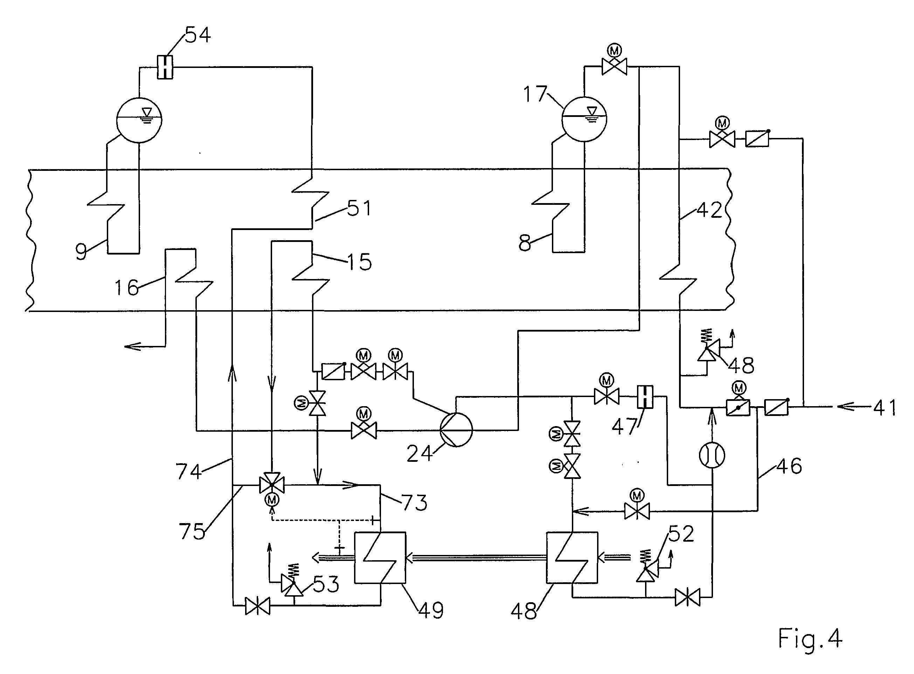

Figur 4 zeigt einen Ausschnitt aus einem Schaltschema einer bekannten Gas- und Dampfturbinenanlage mit zwei Brennstoffvorwärmstufen 48, 49. Der Mitteldruckspeisewasservorwärmer ist aus zwei Teilen 15, 51 aufgebaut, die zum Abgas parallel geschaltet sind. Die Brennstoffvorwärmstufe 49 ist zwischen die Teile 15, 51 des Mitteldruckspeisewasservorwärmers geschaltet, wobei die Speisewasserzuleitung 73 von einem Ausgang des ersten Teils 15 des Speisewasservorwärmers zur Brennstoffvorwärmstufe 49 und die Speisewasserableitung 74 von der Brennstoffvorwärmstufe 49 zu einem Eingang des zweiten Teils 51 des Speisewasservorwärmers führt. Parallel zur Brennstoffvorwärmstufe 49 ist es eine Bypassleitung 75 vorgesehen, durch die das Speisewasser geleitet werden kann, sofern es nicht durch die Brennstoffvorwärmstufe 49 fließen soll.

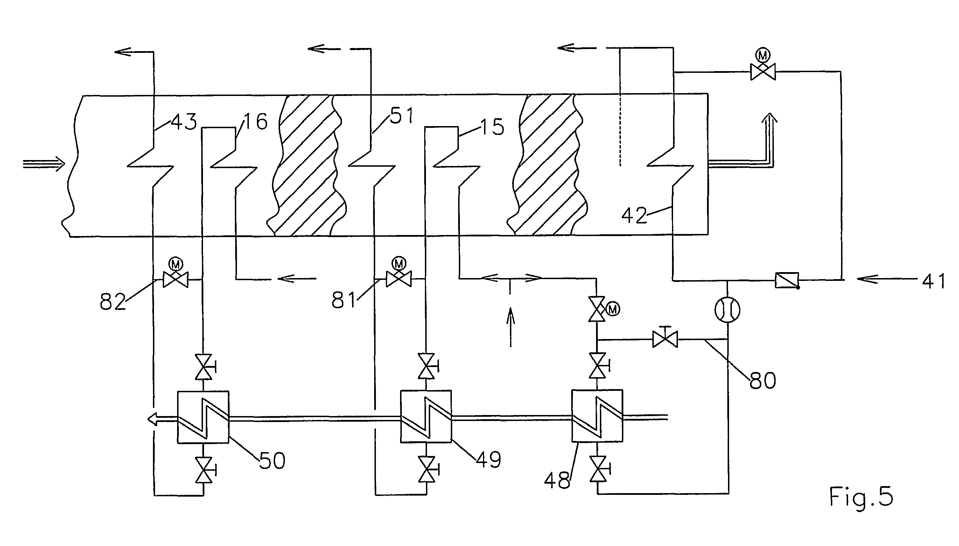

Figur 5 zeigt einen Ausschnitt aus einem Schaltschema einer Gas- und Dampfturbinenanlage mit drei Brennstoffvorwärmstufen 48, 49, 50 gemäß der Erfindung. Die erste Brennstoffvorwärmstufe 48 wird gespeist durch Speisewasser aus dem Bereich vor dem Mitteldruckspeisewasservorwärmer 15. Die zweite Brennstoffvorwärmstufe 49 ist zwischen die beiden Teile 15 und 51 des Mitteldruckspeisewasservorwärmers geschaltet und die dritte Brennstoffvorwärmstufe 50 zwischen die beiden Teile 16 und 43 des Hochdruckspeisewasservorwärmers. Der Brennstoff wird dabei in der ersten Stufe 48 auf ca. 130-150 °C aufgeheizt. In der zweiten Stufe 49 auf 200-220°C und in der dritten Stufe 50 auf ca. 300 °C. Die Brennstoffvorwärmer sind jeweils durch Speisewasserleitungen 80, 81, 82 überbrückbar und können somit umführt werden, falls dies erforderlich ist.

## Patentansprüche

1. Vorrichtung zur Brennstoffvorwärmung in kombinierten Gas- und Dampfturbinenanlagen, mit zumindest einem Dampferzeuger (5, 6, 7), der einen Speisewasservorwärmer (15, 16, 43, 51), einen Verdampfer (8, 9, 10), und einen Überhitzer (11, 12, 13) aufweist, und mit einer Anzahl an bedarfsweise einzeln zuschaltbaren, in Serie angeordneten, Brennstoffvorwärmerstufen (48, 49, 50), wobei zumindest ein Teil an erhitztem Speisewasser mittels einer Speisewasserzuleitung (35, 36, 37, 56, 58, 60, 73) den Brennstoffvorwärmerstufen (48, 49, 50) zuführbar und mittels einer Speisewasserableitung (57, 59, 61, 74) von den Brennstoffvorwärmerstufen (48, 49, 50) ableitbar ist,
**dadurch gekennzeichnet, daß**
die Vorrichtung drei Brennstoffvorwärmstufen (48, 49, 50) umfasst, wobei mittels der Speisewasserzuleitung (35, 36, 37, 56, 58, 60, 73) eine erste Brennstoffvorwärmstufe (48) mit einem Kondensatvorwärmer (42), eine zweite Brennstoffvorwärmstufe (49) mit einem Mitteldruckspeisewasservorwärmer (15, 51) und eine dritte Brennstoffvorwärmstufe (50) mit einem Hochdruckspeisewasservorwärmer (16, 43) verbunden ist.

2. Vorrichtung nach Anspruch 1,
**dadurch gekennzeichnet, daß**
der Mitteldruckspeisewasservorwärmer aus zwei Teilen (15, 51) aufgebaut ist, die zum Abgas parallel geschaltet sind, und die zweite Brennstoffvorwärmstufe (49) zwischen die Teile (15,51) geschaltet ist, wobei die Speisewasserzuleitung (73) mit einem Ausgang des ersten Teils (15) des Speisewasservorwärmers und mit der zweiten Brennstoffvorwärmstufe (49), und die Speisewasserableitung (74) mit der zweiten Brennstoffvorwärmstufe (49) und einem Eingang des zweiten Teils (51) des Speisewasservorwärmers verbunden ist.

3. Vorrichtung nach Anspruch 1 oder 2,
**dadurch gekennzeichnet, daß**
die Speisewasserzuleitung (58) der ersten Brennstoffvorwärmstufe (48) an einer Speisewasserpumpe (24) nach dem Kondensatvorwärmer (42) angesetzt ist und die Speisewasserableitung (59) dieser ersten Brennstoffvorwärmstufe (48) vor den Kondensatvorwärmer (42) führt.

4. Vorrichtung nach Anspruch 3,
**dadurch gekennzeichnet, daß**
die Speisewasserzuleitung (56) der zweiten Brennstoffvorwärmstufe (49) nach dem Mitteldruckspeisewasservorwärmer (15, 51) angesetzt ist und die Speisewasserableitung (57) dieser zweiten Brennstoffvorwärmstufe (49) vor die Speisewasserpumpe (24) führt.

5. Vorrichtung nach einem der Ansprüche 1 bis 3,
**dadurch gekennzeichnet, daß**
die Speisewasserzuleitung (56) der zweiten Brennstoffvorwärmstufe (49) zwischen einer Mitteldrucktrommel (18) und dem Mitteldruckspeisewasservorwärmer (15, 51) angesetzt ist und die Speisewasserableitung (60) dieser zweiten Brennstoffvorwärmstufe (49) mit einer Niederdrucktrommel (17) verbunden ist.

6. Vorrichtung nach einem der Ansprüche 1 bis 3,
**dadurch gekennzeichnet, daß**
die Speisewasserzuleitung (56) der zweiten Brennstoffvorwärmstufe (49) zwischen einer Mitteldrucktrommel (18) und dem Mitteldruckspeisewasservorwärmer (15, 51) angesetzt ist und die Speisewasserableitung (60) dieser zweiten Brennstoffvorwärmstufe (49) zwischen Kondensatvorwärmer (42) und einer Niederdrucktrommel (17) angesetzt ist.

7. Vorrichtung nach einem der Ansprüche 1 bis 6,
**dadurch gekennzeichnet, daß**
der Kondensatwasservorwärmer (42) und/oder der Mit teldruckspeisewasservorwärmer (15,51) und/oder der Hochdruckspeisewasservorwärmer (16,43) zweiteilig ausgebildet sind und die erste Brennstoffvorwärmstufe (48) zwischen die zwei Teile des Kondensatwasservorwärmers (42) und/oder die zweite Brennstoffvorwärmstufe (49) zwischen die zwei Teile des Mitteldruckspeisewasservorwärmers (15,51) und/oder die dritte Brennstoffvorwärmstufe (50) zwischen die zwei Teile (16, 43) des Hochdruckspeisewasservorwärmers (16,43) geschaltet sind.

8. Vorrichtung nach einem der Ansprüche 1 bis 7,
**dadurch gekennzeichnet , daß**
eine Zumischleitung (46) zwischen einer Kondensatpumpe (41) und einer Absperrklappe (76) angesetzt ist und zu einem Einlaß (77) des Speisewassers in die erste Brennstoffvorwärmstufe (48) führt.

9. Vorrichtung nach einem der Ansprüche 3 bis 8,
**dadurch gekennzeichnet, daß**
eine weitere Zumischleitung (78) an einem weiteren Einlaß (79) der zweiten Brennstoffvorwärmstufe (49) mit einer Mitteldruckspeisewasserzuleitung (56) angesetzt ist, wobei die weitere Zumischleitung (78) zwischen der Speisepumpe (24) und dem Mitteldruckspeisewasservorwärmer (15) beginnt.

10. Verfahren zur Brennstoffvorwärmung in kombinierten Gas- und Dampfturbinenanlagen, insbesondere mit Hilfe einer Vorrichtung nach einem der Ansprüche 1 bis 9, wobei Speisewasser in zumindest einem Dampferzeuger (5, 6, 7) in einem Speisewasservorwärmer (15, 16, 43, 51) oder Kondensatvorwärmer (42) erwärmt, in einem Verdampfer (8, 9, 10) verdampft und in einem Überhitzer (11, 12, 13) überhitzt wird, wobei zumindest ein Teil des erhitzten Speisewassers zur Vorwärmung von Brennstoff in einem Brennstoffvorwärmer eingesetzt wird, der durch eine Speisewasserzuleitung (35, 36, 37, 56, 58, 60, 73) mit . Speisewasser einer vorbestimmten Temperatur versorgt wird, und nach dem Erwärmen des Brennstoffs das abgekühlte Speisewasser mittels jeweils einer Speisewasserableitung (57, 59, 61, 74) abgeleitet wird, und daß die Brennstoffvorwärmung in bedarfsweise zuschaltbaren Brennstoffvorwärmerstufen (48, 49, 50) erfolgt, wobei der Brennstoff nacheinander durch die Brennstoffvorwärmstufen geleitet wird,
**dadurch gekennzeichnet, daß** durch eine erste Brennstoffvorwärmstufe (48) Speisewasser aus einem Kondensatvorwärmer (42), durch eine zweite Brennstoffvorwärmstufe (49) Speisewasser aus einem Mitteldruckspeisewasservorwärmer (15, 51) und durch eine dritte Brennstoffvorwärmstufe (50) Speisewasser aus einem Hochdruckspeisewasservorwärmer (16, 43) geleitet wird.

11. Verfahren nach Anspruch 10,
**dadurch gekennzeichnet , daß** das Speisewasser zunächst durch einen ersten Teil (15) des Mitteldruckspeisewasservorwärmers, anschließend durch eine Speisewasserzuleitung (73) zur zweiten Brennstoffvorwärmstufe (49) und danach durch eine Speisewasserableitung (74) zu einem zweiten Teil (51) des Mitteldruckspeisewasservorwärmers geleitet wird, wobei die beiden Teile (15, 51) zum Abgas parallel geschaltet sind.

## Claims

1. Device for fuel preheating in combined gas and steam turbine plants, with at least one steam generator (5, 6, 7,) which has a feedwater preheater (15, 16, 43, 51), an evaporator (8, 9, 10) and a superheater (11, 12, 13), and with a number of fuel preheating stages (48, 49, 50) which can be activated individually, as required, and which are arranged in series, at least part of heated feedwater being capable of being supplied to the fuel preheating stages (48, 49, 50) by means of a feedwater delivery line (35, 36, 37, 56, 58, 60, 73) and being capable of being discharged from the fuel preheating stages (48, 49, 50) by means of a feedwater discharge line (57, 59, 61, 74), **characterized in that** the device comprises three fuel preheating stages (48, 49, 50), by means of the feedwater delivery line (35, 36, 37, 56, 58, 60, 73) a first fuel preheating stage (48) being connected to a condensate preheater (42), a second fuel preheating stage (49) to a medium-pressure feedwater preheater (15, 51) and a third fuel preheating stage (50) to a high-pressure feedwater preheater (16, 43).

2. Device according to Claim 1, **characterized in that** the medium-pressure feedwater preheater is constructed from two parts (15, 51) which are connected in parallel to the exhaust gas and the second fuel preheating stage (49) is connected between the parts (15, 51), the feedwater delivery line (73) being connected to an outlet of the first part (15) of the feedwater preheater and to the second fuel preheating stage (49), and the feedwater discharge line (74) being connected to the second fuel preheating stage (49) and to an inlet of the second part (51) of the feedwater preheater.

3. Device according to Claim 1 or 2, **characterized in that** the feedwater delivery line (58) of the first fuel preheating stage (48) is attached to a feedwater pump (24) downstream of the condensate preheater (42), and the feedwater discharge line (59) of this first fuel preheating stage (48) leads upstream of the condensate preheater (42).

4. Device according to Claim 3, **characterized in that** the feedwater delivery line (56) of the second fuel preheating stage (49) is attached downstream of the medium-pressure feedwater preheater (15, 51), and the feedwater discharge line (57) of this second fuel preheating stage (49) leads upstream of the feedwater pump (24).

5. Device according to one of Claims 1 to 3, **characterized in that** the feedwater delivery line (56) of the second fuel preheating stage (49) is attached between a medium-pressure drum (18) and the medium-pressure feedwater preheater (15, 51), and the feedwater discharge line (60) of this second fuel preheating stage (49) is connected to a low-pressure drum (17).

6. Device according to one of Claims 1 to 3, **characterized in that** the feedwater delivery line (56) of the second fuel preheating stage (49) is attached between a medium-pressure drum (18) and the medium-pressure feedwater preheater (15, 51), and the feedwater discharge line (60) of this second fuel preheating stage (49) is attached between the condensate preheater (42) and a low-pressure drum (17).

7. Device according to one of Claims 1 to 6, **characterized in that** the condensate water preheater (42) and/or the medium-pressure feedwater preheater (15, 51) and/or the high-pressure feedwater preheater (16, 43) are designed in two parts, and the first fuel preheating stage (48) is connected between the two parts of the condensate water preheater (42) and/or the second fuel preheating stage (49) is connected between the two parts of the medium-pressure feedwater preheater (15, 51) and/or the third fuel preheating stage (50) is connected between the two parts (16, 43) of the high-pressure feedwater preheater (16, 43).

8. Device according to one of Claims 1 to 7, **characterized in that** an admixing line (46) is attached between a condensate pump (41) and a shutoff valve (76) and leads to an inlet (77) of the feedwater into the first fuel preheating stage (48).

9. Device according to one of Claims 3 to 8, **characterized in that** a further admixing line (78) is attached to a further inlet (79) of the second fuel preheating stage (49) by means of a medium-pressure feedwater delivery line (56), the further admixing line (78) starting between the feed pump (24) and the medium-pressure feedwater preheater (15).

10. Method for fuel preheating in combined gas and steam turbine plants, in particular with the aid of a device according to one of Claims 1 to 9, feedwater in at least one steam generator (5, 6, 7) being heated in a feedwater preheater (15, 16, 43, 51) or condensate preheater (42), being evaporated in an evaporator (8, 9, 10) and being superheated in a superheater (11, 12, 13), at least part of the heated feedwater eing used for the preheating of fuel in a fuel preheater which is supplied with feedwater of a predetermined temperature by means of a feedwater delivery line (35, 36, 37, 56, 58, 60, 73), and, after the heating of the fuel, the cooled feedwater being discharged in each case by means of a feedwater discharge line (57, 59, 61, 74), **characterized in that** fuel preheating takes place in fuel preheating stages (48, 49, 50) which can be activated, as required, the fuel being conducted in succession through the fuel preheating stages, and **in that** feedwater from a condensate preheater (42) is conducted through a first fuel preheating stage (48), feedwater from a medium-pressure feedwater preheater (15, 51) is conducted through a second fuel preheating stage (49) and feedwater from a high-pressure feedwater preheater (16, 43) is conducted through a third fuel preheating stage (50).

11. Method according to Claim 10, **characterized in that** the feedwater is conducted first through a first part (15) of the medium-pressure feedwater preheater, subsequently through a feedwater delivery line (73) to the second fuel preheating stage (49) and thereafter through a feedwater discharge line (74) to a second part (51) of the medium-pressure feedwater preheater, the two parts (15, 51) being connected in parallel to the exhaust gas.

## Revendications

1. Dispositif de préchauffage de combustible dans des installations combinées de turbine à gaz et de turbine à vapeur, comprenant au moins un générateur ( 5, 6, 7 ) de vapeur, qui a un préchauffeur ( 15, 16, 43, 51) d'eau d'alimentation, un évaporateur ( 8, 9, 10 ) et un surchauffeur ( 11, 12, 13 ), et un certain nombre d'étages( 47, 48, 49, 50 ) de préchauffeurs de combustible pouvant être branchés individuellement en cas de besoin et montés en série, au moins une partie d'eau d'alimentation chauffée pouvant être apportée aux étages ( 48, 49, 50 ) de préchauffeur de combustible au moyen d'un conduit ( 35, 36, 37, 56, 58, 60, 73 ) d'apport d'eau d'alimentation et pouvant être évacuée des étages ( 48, 49, 50 ) de préchauffeur de combustible au moyen d'un conduit ( 57, 59, 61, 74 ) d'évacuation de l'eau d'alimentation,
**caractérisé en ce que** le dispositif comprend trois étages ( 48, 49, 50 ) de préchauffage du combustible, un premier étage ( 48 ) de préchauffage du combustible communiquant au moyen du conduit ( 35, 36, 37, 56, 58, 60, 73 ) d'apport d'eau d'alimentation avec un préchauffeur ( 42 ) de produit condensé, un deuxième étage ( 49 ) de préchauffage du combustible communiquant avec un préchauffeur ( 15, 51 ) d'eau d'alimentation de pression moyenne et un troisième étage ( 50 ) de préchauffeur du combustible communiquant avec un préchauffeur ( 16, 43 ) d'eau d'alimentation de haute pression.

2. Dispositif suivant la revendication 1, **caractérisé en ce que** le préchauffeur d'eau d'alimentation de moyenne pression est constitué de deux parties ( 15, 51 ) qui sont montées en parallèle pour le gaz d'échappement et le deuxième étage ( 49 ) de préchauffage de combustible est monté entre les parties ( 15, 51 ), le conduit ( 73 ) d'apport d'eau d'alimentation communiquant avec une sortie de la première partie ( 15 ) du préchauffeur d'eau d'alimentation et avec le deuxième étage ( 49 ) de préchauffage de combustible et le conduit ( 74 ) d'évacuation de l'eau d'alimentation communiquant avec le deuxième étage ( 49 ) de préchauffage de combustible et avec une entrée de la deuxième partie ( 51 ) du préchauffeur de l'eau d'alimentation.

3. Procédé suivant la revendication 1 ou 2, **caractérisé en ce que** le conduit ( 58 ) d'apport d'eau d'alimentation du premier étage ( 48 ) de préchauffage de combustible est raccordé à une pompe ( 24 ) d'eau d'alimentation après le préchauffeur ( 42 ) de produit condensé et le conduit ( 59 ) d'évacuation de l'eau d'alimentation mène à ce premier étage ( 48 ) de préchauffage de combustible avant le préchauffeur ( 42 ) de produit condensé.

4. Procédé suivant la revendication 3, **caractérisé en ce que** le conduit ( 56 ) d'apport d'eau d'alimentation du deuxième étage ( 49 ) de préchauffage de combustible est raccordé après le préchauffeur ( 15, 51 ) d'eau d'alimentation moyenne pression et le conduit ( 57 ) d'évacuation de l'eau d'alimentation mène à ce deuxième étage ( 49 ) de préchauffage de combustible avant la pompe ( 24 ) d'eau d'alimentation.

5. Procédé suivant l'une des revendications 1 à 3, **caractérisé en ce que** le conduit ( 56 ) d'apport d'eau d'alimentation du deuxième étage ( 49 ) de préchauffage de combustible est raccordé entre un ballon ( 18 ) moyenne pression et le préchauffeur ( 15, 51 ) d'eau d'alimentation moyenne pression et le conduit ( 60 ) d'évacuation de l'eau d'alimentation de ce deuxième étage ( 49 ) de préchauffage de combustible communique avec un ballon ( 17 ) basse pression.

6. Procédé suivant l'une des revendications 1 à 3 **caractérisé en ce que** le conduit ( 56 ) d'apport de l'eau d'alimentation du deuxième étage ( 49 ) de préchauffage de combustible est raccordé entre un ballon ( 18 ) moyenne pression et le préchauffeur ( 15, 51 ) de l'eau d'alimentation moyenne pression et le conduit ( 60 ) d'évacuation de l'eau d'alimentation de ce deuxième étage ( 49 ) de préchauffage de combustible est raccordé entre le préchauffeur ( 42 ) du produit condensé et un ballon ( 17 ) basse pression.

7. Procédé suivant l'une des revendications 1 à 6, **caractérisé en ce que** le préchauffeur ( 42 ) d'eau de produit condensé et/ou le préchauffeur ( 15, 51 ) d'eau d'alimentation moyenne pression et/ou le préchauffeur ( 16, 43 ) d'eau d'alimentation haute pression sont en deux parties et le premier étage ( 48 ) de préchauffage de combustible est monté entre les deux parties du préchauffeur ( 42 ) d'eau de produit condensé et/ou le deuxième étage ( 49 ) de préchauffage de combustible est monté entre les deux parties du préchauffeur ( 15, 51 ) d'eau d'alimentation moyenne pression et/ou le troisième étage ( 50 ) de préchauffage de combustible est monté entre les deux parties ( 16, 43 ) du préchauffeur ( 16, 43 ) d'eau d'alimentation haute pression.

8. Procédé suivant l'une des revendications 1 à 7, **caractérisé en ce qu'**un conduit ( 46 ) de mélange est raccordé entre une pompe ( 41 ) de produit condensé et un volet ( 76 ) d'obturation et mène à une entrée ( 77 ) de l'eau d'alimentation dans le premier étage ( 48 ) de préchauffage de combustible.

9. Procédé suivant l'une des revendications 3 à 8, **caractérisé en ce qu'**un autre conduit ( 78 ) de mélange est raccordé à une autre entrée ( 79 ) du deuxième étage ( 49 ) de préchauffage de combustible par un conduit ( 56 ) d'apport d'eau d'alimentation moyenne pression, l'autre conduit ( 78 ) de mélange commençant entre la pompe ( 24 ) d'alimentation et le préchauffeur ( 15 ) d'eau d'alimentation moyenne pression.

10. Procédé de préchauffage de combustible dans des installations combinées de turbine à gaz et de turbine à vapeur, notamment à l'aide d'un dispositif suivant l'une des revendications 1 à 9, dans lequel on échauffe de l'eau d'alimentation d'au moins un générateur ( 5, 6, 7 ) de vapeur dans un préchauffeur ( 15, 16, 43, 51 ) d'eau d'alimentation ou dans un préchauffeur ( 42 ) de produit condensé, on l'évapore dans un évaporateur ( 8, 9, 10 ) et on la surchauffe dans un surchauffeur ( 11, 12, 13 ), au moins une partie de l'eau d'alimentation surchauffée étant utilisée pour préchauffer du combustible dans un préchauffeur de combustible qui est alimenté par un conduit ( 35, 36, 37, 56, 58, 60, 73 ) d'apport d'eau d'alimentation en eau d'alimentation d'une température déterminée à l'avance et après l'échauffement du combustible, l'eau d'alimentation refroidie est évacuée au moyen respectivement d'un conduit ( 57, 59, 61, 74 ) d'évacuation de l'eau d'alimentation et en ce que le préchauffage du combustible s'effectue dans des étages ( 48, 49, 50 ) de préchauffage de combustible pouvant être branchés en cas de besoin, le combustible passant successivement dans les étages de préchauffage de combustible,
**caractérisé en ce que** l'on fait passer dans un premier étage ( 48 ) de préchauffage de combustible de l'eau d'alimentation provenant d'un préchauffeur ( 42 ) de produit condensé, dans un deuxième étage ( 49 ) de préchauffage de combustible de l'eau d'alimentation provenant d'un préchauffeur ( 15, 51 ) d'eau d'alimentation moyenne pression et dans un troisième étage de( 52 ) préchauffage de combustible de l'eau d'alimentation provenant d'un préchauffeur ( 16, 43 ) d'eau d'alimentation de haute pression.

11. Procédé suivant la revendication 10,
**caractérisé en ce que** l'on fait passer l'eau d'alimentation d'abord dans une première partie ( 15 ) du préchauffeur d'eau d'alimentation moyenne pression, ensuite on l'envoie par un conduit ( 73 ) d'apport d'eau d'alimentation au deuxième étage ( 49 ) de préchauffage de combustible et ensuite par un conduit ( 74 ) d'évacuation de l'eau d'alimentation on l'envoie à une deuxième partie ( 51 ) du préchauffeur d'eau d'alimentation moyenne pression, les deux parties ( 15, 51 ) étant montées en parallèle pour le gaz d'échappement.
